# EUROPEAN PATENT APPLICATION

(11) **EP 2 950 470 A1**
(43) Date of publication of application: **02.12.2015**
(21) Application number: 13872710.2
(22) Date of filing: 20.12.2013
(51) Int. Cl.: H04J 11/00, H04B 1/707, H04W 56/00

(54) **WIRELESS BASE STATION, USER TERMINAL AND WIRELESS COMMUNICATION METHOD**

(30) Priority: 24.01.2013 JP 2013011434
(71) Applicant: NTT DOCOMO, INC., Chiyoda-ku Tokyo 100-6150 (JP)
(72) Inventor: KAKISHIMA, Yuichi, Tokyo 100-6150 (JP); NAGATA, Satoshi, Tokyo 100-6150 (JP); KISHIYAMA, Yoshihisa, Tokyo 100-6150 (JP); YASUKAWA, Shimpei, Tokyo 100-6150 (JP); TAKEDA, Kazuaki, Tokyo 100-6150 (JP)
(74) Representative: Hoffmann Eitle
(86) International application number: PCT/JP2013/084276
(87) International publication number: WO 2014/115458

(57) **Abstract**

In order to compensate for frequency errors even when introducing a new carrier, the present invention provides a radio base station having a configuring section that configures a first carrier type subframe in which cell-specific reference signals are mapped at a predetermined density, and a second carrier type subframe in which cell-specific reference signals are mapped at a density that is lower than the density of the first carrier type subframe; a generating section that, when configuring the second carrier type subframe, generates at least a synchronization signal to use for frequency synchronization; and a transmitting section that transmits association information for associating the synchronization signal with an other downlink signal that is transmitted in the second carrier type subframe.

## Description

### TECHNICAL FIELD

The present invention relates to a radio base station, a user terminal and a radio communication method applicable to a cellar system or the like.

### BACKGROUND ART

In a UMTS (Universal Mobile Telecommunications System) network, for the purposes of further increasing data rates, providing low delay and so on, long-term evolution (LTE) has been under study (see Non Patent Literature 1). In LTE, as multi access schemes, an OFDMA (Orthogonal Frequency Division Multiple Access)-based system is adopted for the downlink and an SC-FDMA (Single Carrier Frequency Division Multiple Access)-based system is adopted for the uplink.

In addition, for the purpose of achieving more broadbandization and higher speeds than LTE, a LTE successor system has been also under study (for example, it is called LTE advanced or LTE enhancement (hereinafter referred to as "LTE-A")). In LTE-A (Rel. 10), carrier aggregation (CA) has been adopted in which a plurality of component carriers (CCs) are aggregated into a wide band, each component carrier being a unit of system band of the LTE system. Further, in LTE-A, HetNet (Heterogeneous Network) configuration using interference coordination technique (eICIC: enhanced Inter-Cell Interference Coordination) has been studied.

### CITATION LIST

### NON-PATENT LITERATURE

Non-Patent Literature 1: 3GPP TR 25.913 "Requirements for Evolved UTRA and Evolved UTRAN"

### SUMMARY OF INVENTION

### TECHNICAL PROBLEM

Now, in future systems (for example, Rel. 12 or later version), carrier aggregation is expected for reducing interference in HetNet. In carrier aggregation in HetNet, use of reference signals such as existing cell-specific reference signals (CRSs) is also considered, but this use may cause problems in terms of reduction in interference.

Hence, in order to realize carrier aggregation in consideration of reduction in interference in HetNet, a new carrier has been studied to be defined for a user terminal supporting future system (for example, Rel. 12 or later). In the new carrier, it has been considered that the density of inserted CRSs (allocation density to radio resources) is lowered. In this case, if performing estimation of a frequency offset using CRS (frequency synchronization), there may occur a problem of difficulty in compensating for frequency errors sufficiently at the time of receiving control signals and reference signals.

The present invention was carried out in view of the foregoing, and aims to provide a radio base station, a user terminal and a radio communication method capable of compensating for frequency errors even when introducing a new carrier.

### SOLUTION TO PROBLEM

The present invention provides a radio base station comprising: a configuring section that configures a first carrier type subframe in which cell-specific reference signals are mapped at a predetermined density, and a second carrier type subframe in which cell-specific reference signals are mapped at a density that is lower than the predetermined density of the first carrier type subframe; a generating section that, when configuring the second carrier type subframe, generates a synchronization signal to use at least for frequency synchronization; and a transmitting section that transmits association information for associating the synchronization signal with an other downlink signal that is transmitted in the second carrier type subframe.

### ADVANTAGEOUS EFFECTS OF INVENTION

According to the present invention, it is possible to compensate for frequency errors even when introducing a new carrier.

### BRIEF DESCRIPTION OF DRAWINGS

Fig. 1 provides diagrams each for explaining a carrier type;
Fig. 2 provides diagrams each for explaining coordinated multipoint transmission;
Fig. 3 provides a diagram illustrating an example of transmission of downlink signals from a plurality of transmission points and a diagram explaining reception power of a downlink signal transmitted from each transmission point;
Fig. 4 provides diagrams each illustrating an example of association between synchronization signals and other downlink signals when the signals are transmitted from a plurality of transmission points;
Fig. 5 is a diagram illustrating an example of CSI-RS mapping;
Fig. 6 provides diagrams each illustrating an example of extended CSI-RS mapping;
Fig. 7 is a diagram for explaining a system configuration of a radio communication system;
Fig. 8 is a diagram for explaining an overall configuration of a radio base station;
Fig. 9 is a functional block diagram illustrating a baseband signal processing section provided in the radio base station and a part of higher layer;
Fig. 10 is a diagram for explaining an overall configuration of a user terminal; and
Fig.11 is a functional block diagram illustrating a baseband signal processing section provided in the user terminal.

### DESCRIPTION OF EMBODIMENTS

In a future system (for example, Rel. 12 or later system), there is expected extension of carrier aggregation specialized for HetNet. In this case, in order to realize carrier aggregation (CA) in consideration of reduction of interference in HetNet, introduction of a new carrier having no compatibility with component carriers of the existing CA has been under study. Such a carrier that is selectively available for specific user terminals (for example, user terminals of Rel. 12 or later) is called "new carrier type" (NCT). The new carrier may be also called "additional carrier type" or "extension carrier".

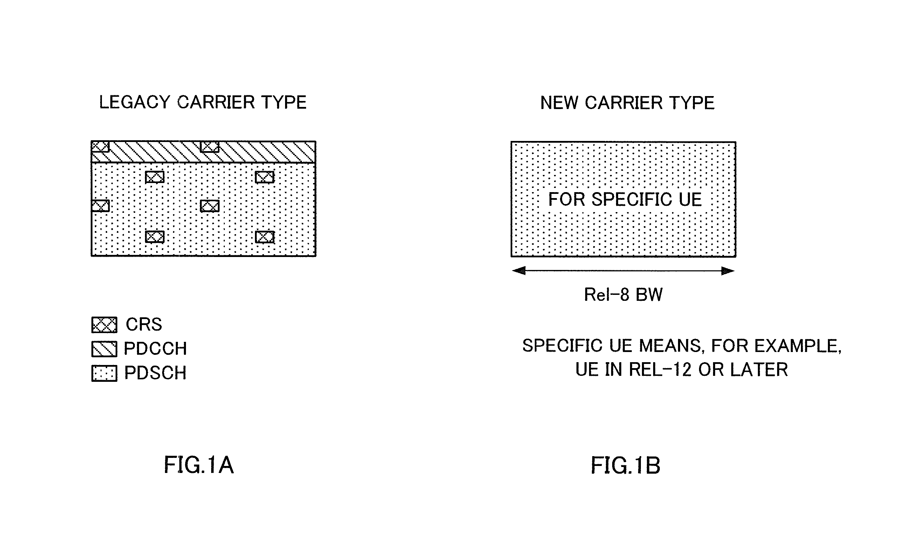

The carrier type is described with reference to Fig. 1. Fig. 1A illustrates an example of the existing carrier type (legacy carrier type) and Fig. 1B illustrates an example of new carrier type (NCT). In Fig. 1, CRS, PDCCH (Physical Downlink Control Channel) and PDSCH (Physical Downlink Shared Channel) are only illustrated for convenience of explanation.

In the existing carrier type (legacy carrier type), as illustrated in Fig. 1A, PDCCH is configured with first to maximum third OFDM symbols in a resource block defined in LTE. Also in the existing carrier type, CRS is mapped so as not to overlap with user data (PDSCH), DM-RSs (Demodulation Reference Signals) and other reference signals in a resource block.

CRS is used in frequency synchronization processing, channel estimation and the like and is mapped to a plurality of resource elements (REs) in accordance with a predetermined rule. In addition, when there are a plurality of antenna ports, CRSs corresponding to respective antenna ports are mapped to mutually different resource elements and are subjected to orthogonal multiplexing by time-division-multiplexing (TDM)/frequency-division-multiplexing (FDM).

The existing carrier type illustrated in Fig. 1A is supported by existing user terminals (for example, UE of Rel. 11 or earlier) and new user terminals (for example, UE of Rel. 12 or later). On the other hand, the new carrier type is supported by specific user terminals (for example, UE of Rel. 12 or later) and is configured not to be supported by other users (for example, UE of Rel. 11 or earlier) (with no backward compatibility).

As for the new carrier type, for example, limitation to restrict CRS transmission has been considered (reduction in CRS allocation density). For example, it has been considered that CRS is not transmitted (see Fig. 1B) or some of signals are transmitted selectively. In this case, in the new carrier type, user data can be allocated to resources that are allocated to existing CRS.

Besides, in the new carrier type, DM-RS is used to be able to perform data demodulation and CSI-RS (channel state information-reference signal) is used to be able to perform channel state measurement.

Further, in the new carrier type, it may be configured that downlink control channels (PDCCH, PHICH, PCFICH) are not transmitted or some of signals are transmitted selectively. In such a case, in the new carrier type, user data can be allocated to existing downlink control channel resources. On the other hand, in the new carrier type, enhanced PDCCH (EPDCCH: Enhanced Physical Downlink Control Channel) is able to be transmitted.

EPDCCH is a control channel that is arranged to be frequency-division-multiplexed with PDSCH for downlink data signals. The EPDCCH is used for notification of scheduling information, system information transmitted by broadcast signals and so on. The EPDCCH can be demodulated using demodulation reference signals (DM-RSs).

Thus, in the newly defined new carrier type, CRS insertion density (allocation density to radio resources) has been expected to be reduced. In existing carriers, the user terminal performs frequency offset estimation using CRSs and so on. Therefore, when using the carrier with CRSs allocated at a lower density, it may be difficult to compensation for frequency errors sufficiently when receiving downlink shared channels (PDSCH), enhanced control channels (EPDCCH), reference signals and so on.

Then, the inventors of the present invention have found that when applying a carrier with a lower CRS allocation density than the existing carrier, frequency errors in receiving downlink shared channels, enhanced control channels, reference signals or the like can be compensated by configuring at least a synchronization signal used in frequency synchronization. Specifically, they have reached the idea of configuring at least a new synchronization signal for frequency synchronization or extending an existing reference signal (RS) to be used as a synchronization signal.

Besides, the present inventors have found that when downlink signals are transmitted from a plurality of transmission points for coordinated multipoint transmission and reception, association information of a synchronization signal with another downlink signal (for example, DM-RS for PDSCH, CSI-RS, etc.) is signaled to a user terminal so that the user terminal is able to perform reception processing properly.

In the following, the present embodiment will be described concretely with reference to the drawings. In the following description, the new carrier is described, for example, as the new carrier type (NCT) mainly designed for specific user terminals selectively, however, this is not intended for limiting the present invention. The present embodiment is applicable to any cases where the CRS allocation density is lower than that of the existing carrier, for example, it is also applicable to an extension carrier having backward compatibility with existing carriers.

### (FIRST EMBODIMENT)

In the first embodiment, description is made about the case where a new synchronization signal is provided for frequency synchronization or the like when applying a carrier with a lower CRS allocation density than the existing carrier. Here, the carrier with a lower CRS allocation density than the existing carrier includes a carrier with no CRS allocated thereto.

The synchronization signal configured for the new carrier in which cell-specific reference signals (CRSs) are allocated at a lower density than those in a subframe of the existing carrier may be any signal as long as it can be used for frequency synchronization. For example, a discovery signal may be used as the synchronization signal.

The discovery signal is a signal that is defined in downlink of a local-area radio communication scheme and it is a detection signal that is used to detect a local area base station (small base station) by a user terminal. The discovery signal may be called PDCH (Physical Discovery Channel), BS (Beacon Signal), DPS (Discovery Pilot Signal) or the like.

On the other hand, in the configuration where downlink signals including a synchronization signal are transmitted from a plurality of transmission points, correspondence between the synchronization signal and another downlink signal (for example, CSI-RS, DM-RS for PDSCH, DM-RS for EPDCCH, or the like) may sometimes be a problem. The other downlink signal is a reference signal such as a channel state measurement reference signal (CSI-RS), a user-specific reference signal (DM-RS) for a downlink shared channel PDSCH), a demodulation signal (DM-RS) for an enhanced control channel (PDSCH). In the following description, CoMP (Coordinated Multi-Point transmission/reception) is taken as an example of the configuration where downlink signals are transmitted from a plurality of transmission points.

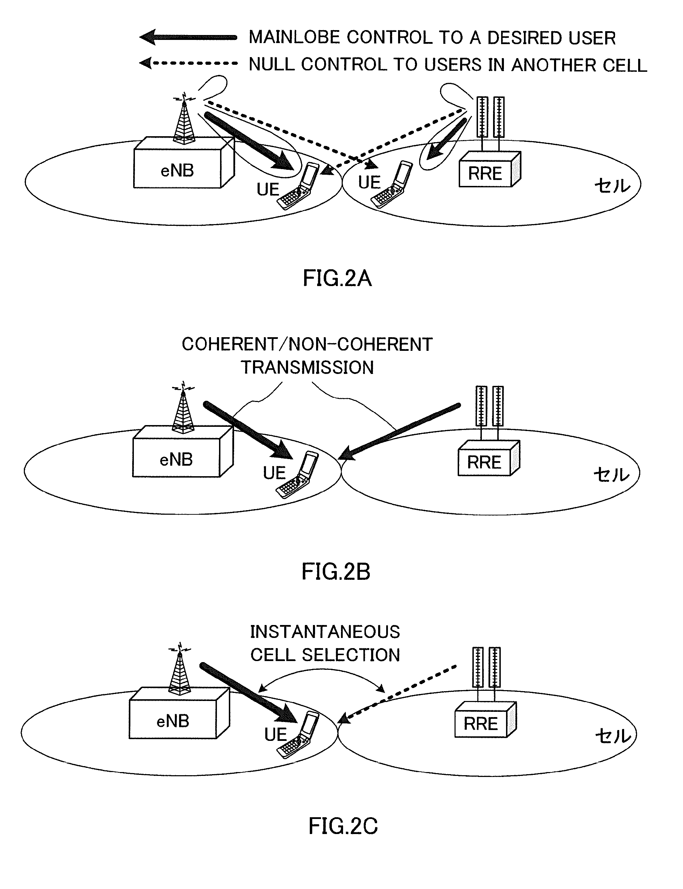

First, downlink coordinated multi-point (CoMP) transmission is described with reference to Fig. 2. As downlink CoMP transmission, there are Coordinated Scheduling/Coordinated Beamforming (CS/CB) and Joint processing. Coordinated Scheduling/Coordinated Beamforming is a method for transmitting a shared data channel to a user terminal UE from one transmission and reception point (or radio base station, cell). As illustrated in Fig. 2A, allocation of radio resources in frequency/space domains is performed in consideration of interference from other transmission and reception points and interference to other transmission and reception points. On the other hand, Joint processing is a method for transmitting shared data channels simultaneously from a plurality of transmission and reception points by using precoding. Joint processing includes Joint transmission for transmitting shared data channels from a plurality of transmission and reception points to one user terminal UE as illustrated in Fig. 2B and Dynamic Point Selection (DPS) for selecting one transmission and reception point instantaneously and transmitting a shared data channel as illustrated in Fig. 2C. It also includes a transmission scheme of Dynamic Point Blanking (DPB) in which data transmission in a fixed region is stopped for an interfering transmission and reception point.

CoMP transmission is applied to improve throughputs of a user terminal located at a cell edge. Therefore, CoMP transmission is controlled to be applied when a user terminal is located at a cell edge. In this case, a radio base station obtains a difference of quality information per cell from the user terminal such as RSRP (Reference Signal Received Power), RSRQ (Reference Signal Received Quality), SINR (Signal Interference plus Noise Ratio) or the like, and when its difference is a threshold or less, or when the quality difference between cells is small, the radio base station determines that the user terminal is located at the cell edge and applies CoMP transmission.

When CoMP technique is applied, downlink signals (downlink control signals, downlink data signals, synchronization signals, reference signals and the like) are transmitted from a plurality of transmission points to a user terminal. The user terminal performs reception processing based on reference signals (e.g., CRS, DM-RS for PDSCH, DM-RS for EPDCCH, CSI-RS, etc.) contained in downlink signals. The reception processing performed by the user terminal is signal processing including, for example, synchronization processing, channel estimation, demodulation processing and so on.

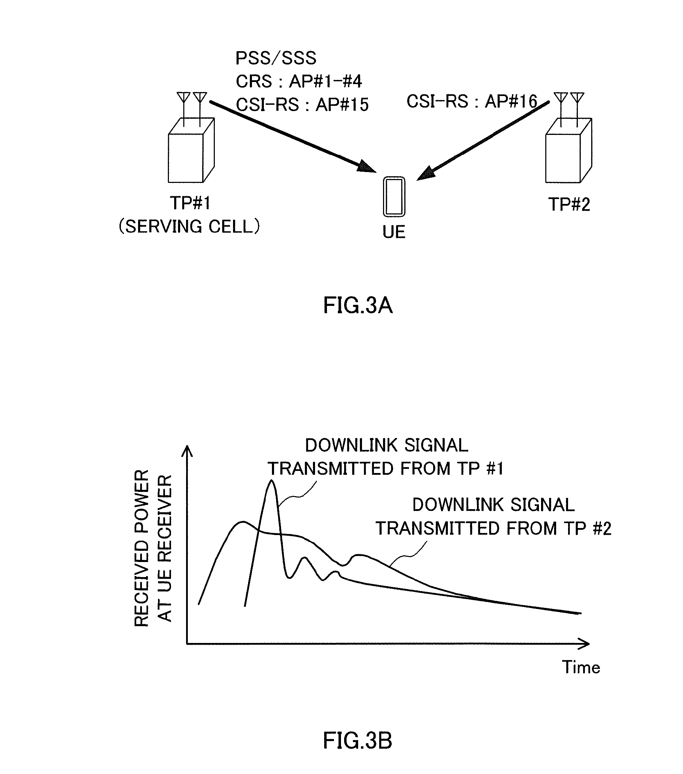

However, when downlink signals are transmitted to the user terminal from geographically different multiple transmission points, the downlink signals are sometimes different in reception signal level, reception timing or the like at the user terminal (see Figs. 3A and 3B). The user terminal is not able to recognize from which transmission point, each of received downlink signals (for example, reference signals allocated to different antenna ports (AP)) is transmitted. Then, when the user terminal performs synchronization processing, channel estimation, demodulation processing and the like using all received reference signals, the reception accuracy may be deteriorated problematically.

Therefore, when performing reception processing using the reference signals transmitted from the respective transmission points, it is preferable that the user terminal performs the reception processing in consideration of geographical locations of the respective transmission points (propagation properties of the downlink signals transmitted from the respective transmission points). Then, assuming "Quasi co-location" in which large-scale propagation properties are the same between different antenna ports (APs), it has been considered that the user terminal performs reception processing depending on whether downlink signals are in "Quasi co-location" or not.

The large-scale propagation properties mean Delay spread, Doppler spread, Doppler shift, Average gain, Average delay and the like, and when some or all of them are the same between transmission points, they are assumed to be in Quasi co-location. Quasi co-location applies to transmission points of geographically same location, however, the transmission points do not necessarily have to be located physically close to each other.

For example, when transmission is performed form APs geographically distant from each other (not in Quasi co-location), the user terminal is able to perform different reception processing from that for Quasi co-location case, upon recognizing that transmission is performed geographically distant APs. Specifically, the user terminal performs the reception processing (for example, signal processing such as channel estimation, synchronization processing, demodulation processing) independently for each of the APs that are geographically distant from each other.

As one example, it is assumed that CRSs are transmitted from APs that are determined to be geographically co-located (in Quasi co-location) and CSI-RSs are transmitted from AP #15 and AP #16 that are determined to be geographically distant from each other (not in Quasi co-location) (see Fig. 3A). In this case, the user terminal performs the reception processing using the CRSs like in the conventional case. As for the CSI-RSs, the user terminal performs reception processing independently for AP #15 and AP #16.

In the user terminal, objects for determining whether or not different APs are in quasi co-location include, for example, PSS (Primary Synchronization Signal)/SSS (Secondary Synchronization Signal), CRS, DM-RS (for PDSCH), DM-RS (for EPDCCH), CSI-RS and the like.

In this way, in Rel. 11 and later, it is important to perform the reception processing (synchronization processing, channel estimation, demodulation processing, etc.) in consideration of association between downlink signals (Quasi co-location relation) depending on the transmission mode. For example, in a transmission mode not-applicable to CoMP (Non CoMP operation, for example, TM 1 to TM 9), assuming that all reference signals and PSS/SSS are in Quasi co-location, the user terminal performs time/frequency synchronization using CRSs and performs reception processing of PDSCH signals.

On the other hand, in a transmission mode applied to CoMP (CoMP operation (e.g., TM 10)), it is assumed that CRS and PSS/SSS are in Quasi co-location and Quasi co-location between DM-RS and CSI-RS and Quasi co-location between CSI-RS and CRS are configured by signaling. In this case, the user terminal performs frequency synchronization using CRS and performs time synchronization using CSI-RS thereby to be able to perform reception processing of PDSCH signals.

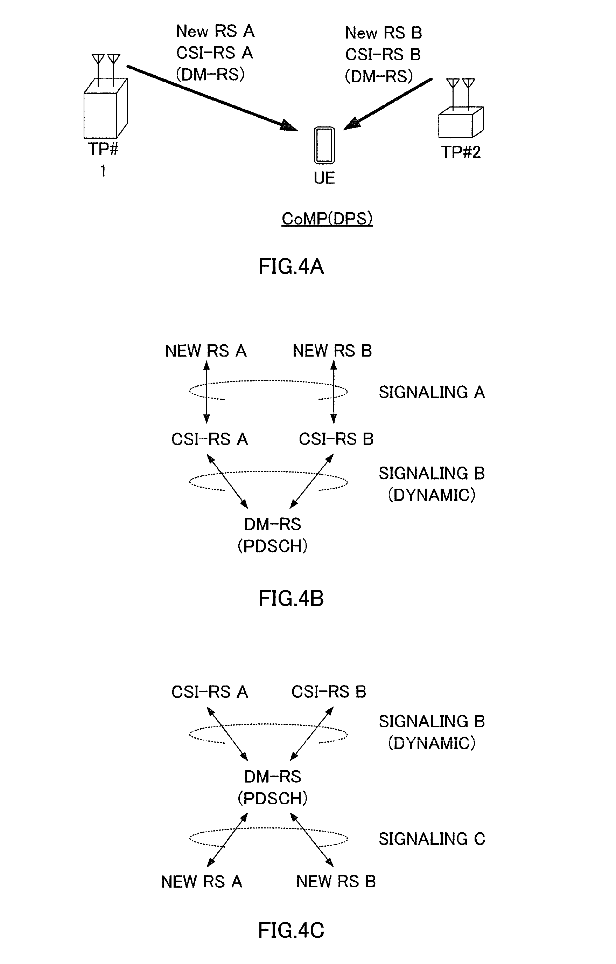

Then, as illustrated in the present embodiment, when configuring a new synchronization signal for frequency synchronization, association between the synchronization signal and a downlink reference signal (for example, CSI-RS, DM-RS for PDSCH, DM-RS for EPDCCH, etc.) (Quasi co-location relation) is signaled to the user terminal (see Fig. 4).

Fig. 4A illustrates the case where downlink reference signals (synchronization signal (New RS), CSI-RS, DM-RS) are given from two transmission points (TP #1, TP #2) to the user terminal. Here, it is assumed that "New RS A" and "CSI-RS A" are transmitted from TP #1 and "New RE B" and "CSI-RS B" are transmitted from TP #2. The antenna ports for "New RS A" and "New RS B" and antenna ports for "CSI-RS A" and "CSI-RS B" may be configured to be different from each other.

The radio base station signals, to the user terminal, association (Quasi co-location relation) between a synchronization signal and CSI-RS in each transmission point (signaling A). With this signaling, the user terminal is able to determine that "New RS A" and "CSI-RS A" or "New RS B" and "CSI-RS B" are in Quasi co-location. Also, by signaling B, the user terminal is able to determine that "CSI-RS A" and "DM-RS A" are in Quasi co-location, and that "CSI-RS B" and "DM-RS B" are in Quasi co-location.

In this case, the user terminal is able to recognize FFT timing and frequency offset for signals transmitted from cell A (TP #1), based on "New RS A" and "CSI-RS A". Likewise, the user terminal is able to recognize FFT timing and frequency offset for signals transmitted from cell B (TP #2), based on "New RS B" and "CSI-RS B".

Besides, signaling of Quasi co-location relation between a synchronization signal and a downlink reference signal (for example, CSI-RS) may be performed dynamically or semistatically by using downlink control information and/or higher layer signaling.

For example, signaling of Quasi co-location relation between a synchronization signal for frequency synchronization and CSI-RS (signaling A in Fig. 4B) may be performed to the user terminal dynamically. In this case, the radio base station transmits in advance, to the user terminal, a plurality of association information candidates defining association information between the synchronization signal and CSI-RS by higher layer signaling (for example, RRC signaling) plural times. Then, the radio base station dynamically transmits, to the user terminal, identification information (bit information) to designate predetermined association information from the plural association information candidates by including the identification information in a downlink control signal (for example, DCI format 2D).

In addition, the radio base station may signal, to the user terminal, Quasi co-location relation between a synchronization signal and CSI-RS by higher layer signaling (for example, RRC signaling) semistatically. With this signaling, it is possible to reduce signaling overhead. Here, if signaling is defined of Quasi co-location relation between CSI-RS and CRS to be transmitted in an existing carrier type subframe, the radio base station may transmit to the user terminal by replacing a cell-specific reference signal with the synchronization signal (or by associating them with each other). In this case, the user terminal is able to determine the Quasi co-location relation between the synchronization signal and CSI-RS as the Quasi co-location relation between CRS and CSI-RS.

That is, when applying the new carrier type, the user terminal determines the Quasi co-location relation between the synchronization signal and CSI-RS by using the Quasi co-location relation between CRS and CSI-RS used under application of an existing carrier. With this structure, even when using a new synchronization signal, it is possible to eliminate the need to add any signaling bits.

Here, correspondence between CSI-RS and DM-RS (Quasi co-location relation) is able to be signaled dynamically from the radio base station to the user terminal (signaling B). The above-mentioned signaling A and the signaling B may use the same mechanism.

As illustrated in Fig. 4B, if the Quasi co-location relation between DM-RS for PDSCH and CSI-RS is signaled to the user terminal, the user terminal is able to determine the Quasi co-location relation between the synchronization signal and DM-RS for PDSCH via the CSI-RS.

In addition, the radio base station may signal the Quasi co-location relation between the synchronization signal for frequency synchronization and DM-RS to the user terminal (signaling C) (see Fig. 4C). In this case, the Quasi co-location relation between the synchronization signal and DM-RS may be signaled dynamically or semistatically by using downlink control information and/or higher layer signaling. Besides, as for signaling of the Quasi co-location relation between the synchronization signal and DM-RS, any of the above-mentioned signaling methods for signaling the Quasi co-location relation between the synchronization signal and CSI-RS may be adopted.

Thus, when applying a carrier of which the density of allocated CRSs is lower than that of the existing carrier, by configuring at least a synchronization signal for frequency synchronization and signaling association information between the synchronization signal and another downlink signal to the user terminal, it is possible to perform the reception processing (channel estimation, synchronization processing, demodulation processing, etc.) in the user terminal appropriately.

### (SECOND EMBODIMENT)

The second embodiment will be explained about the case where, when applying a carrier of which the density of allocated CRSs is lower than that of the existing carrier, synchronization in frequency or the like is performed using a synchronization signal that is extended or modified from an existing reference signal. In the following description, it is assumed as an example that frequency synchronization is performed using a synchronization signal that is extended or modified from CSI-RS.

CSI-RS is a measurement reference signal that is introduced in Rel-10 for the purpose of estimating a channel state. The signal sequence of CSI-RS is a pseud random sequence and is subjected to QPSK modulation. The QPSK-modulated CSI-RS is mapped to a plurality of resource elements (REs) in accordance with the predetermined rule.

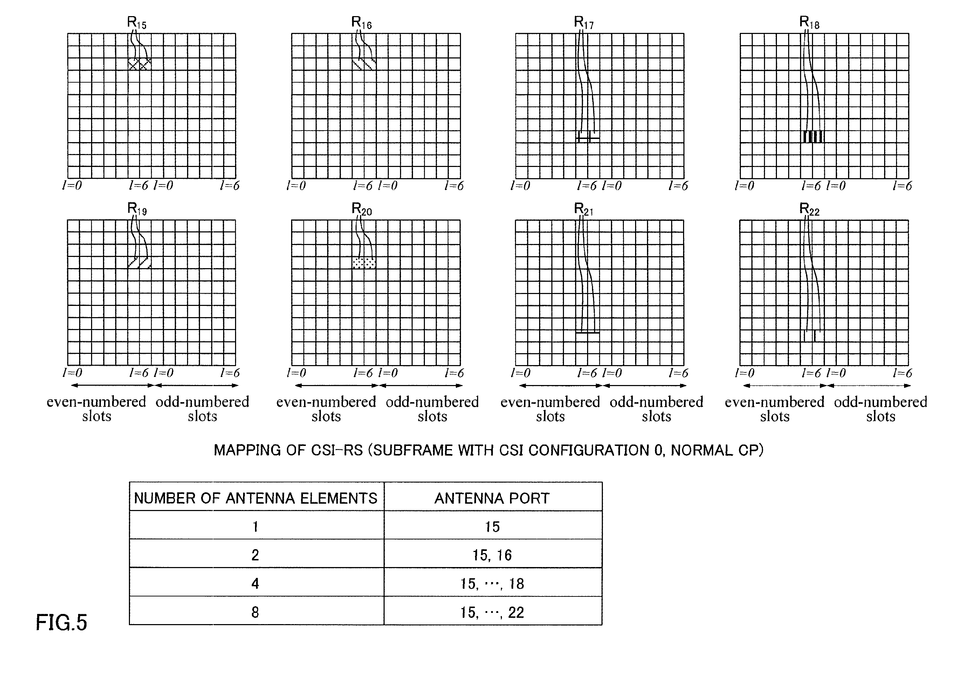

Fig. 5 is a diagram illustrating an example of CSI-RS mapping when there are eight antenna ports. As illustrated in Fig. 5, CSI-RSs of the maximum 8 antenna ports (numbered as 15-22) are supported to enable channel estimation of maximum eight channels in the user terminal. CSI-RSs of the antenna ports (R₁₅-R₂₂) are subjected to orthogonal multiplexing by time division multiplexing (TDM)/frequency division multiplexing (FDM)/code division multiplexing (CDM).

For example, in Fig. 5, CSI-RSs (R₁₅, R₁₆) of antenna ports 15 and 16 are mapped to the same resource elements (REs) and subjected to code division multiplexing (CDM). CSI-RS (R₁₇, R₁₈) of antenna ports 17 and 18, CSI-RS (R₁₉, R₂₀) of antenna ports 19 and 20, and CSI-RS (R₂₁, R₂₂) of antenna ports 21 and 22 are also mapped and multiplexed in the same manner.

In Fig. 5, not only CSI-RS for eight antenna ports, but also CSI-RS for one, two and four antenna ports are supported. In this situation, a nest structure is adopted and CSI-RSs of respective antenna ports are mapped to more resource elements (REs).

Thus, as compared with CRS, the insertion density (allocation density) of allocated CSI-RSs is lower, and therefore, the synchronization accuracy may be lowered for use in frequency synchronization. In view of this, in the second embodiment, the existing CSI-RS is extended to be used as a synchronization signal thereby to improve the synchronization accuracy.

Specifically, in order to perform synchronization using CSI-RS as a synchronization signal, the insertion density of CSI-RS is increased with respect to the frequency domain and/or time domain. In such a case, it is preferable to partially control CSI-RSs to be increased with respect to the frequency domain and/or time domain so as to prevent increase in CSI-RS overhead.

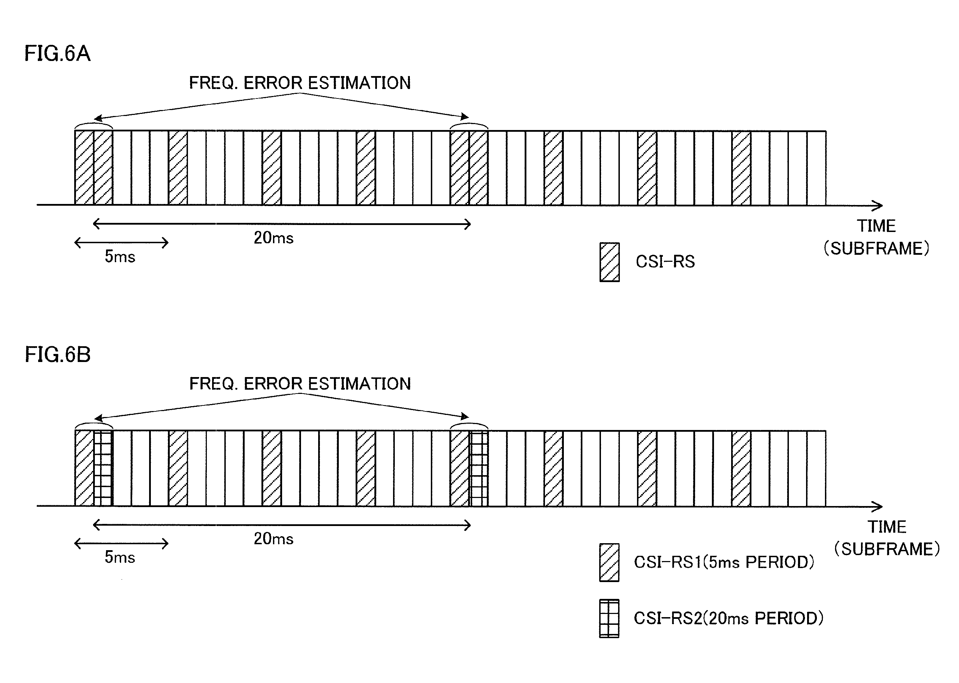

For example, the CSI-RSs are increased selectively (partially) with respect to the time domain (see Fig. 6A). In Fig. 6A, when transmitting existing CSI-RS with a first periodicity (here, 5 ms), CSI-RS is added to be also transmitted with a second periodicity (here, 20 ms) that is longer than the first periodicity and in such a manner that the CSI-RS transmitted with the second periodicity is mapped next to the CSI-RS transmitted with the first periodicity (between subframes). With this structure, synchronization processing is performed in a time domain (subframe) where the existing CSI-RS and the added CSI-RS are adjacent to each other. In this case, it is possible to improve the synchronization accuracy by performing synchronization processing for each time of transmitting CSI-RS additionally (second periodicity).

Besides, a plurality of CSI-RS configurations are configured and the plural CSI-RS configurations are used to be able to perform synchronization processing (see Fig. 6B). For example, in addition to the CSI-RS configuration (CSI-RS 1) for channel state measurement, the CSI-RS configuration to be used in frequency synchronization (CSI-RS 2) is configured and CSI-RS 1 and CSI-RS 2 are used to perform synchronization processing.

The CSI-RS configuration for channel state measurement (estimation) (CSI-RS 1) and the CSI-RS configuration for use in frequency synchronization (CSI-RS 2) are preferably configured in the same subframe or neighbor subframes (see Fig. 6B). In addition, by configuring the periodicity of the CSI-RS configuration for use in frequency synchronization (CSI-RS 2) to be shorter than the periodicity of the CSI-RS configuration for channel state measurement (CSI-RS 1), it is possible to minimize increase in CSI-RS overhead. In Fig. 6B, the CSI-RS configuration for channel state measurement (CSI-RS 1) is given with the first periodicity (here, 5 ms) and the CSI-RS configuration for use in frequency synchronization (CSI-RS 2) is given with the second periodicity (here, 20 ms).

As illustrated in Fig. 6, when the CSI-RS configuration for use in frequency synchronization is transmitted in addition to the CSI-RS configuration for channel state measurement, a combination of CSI-RSs to perform frequency synchronization processing (here, a pair of CSI-RS 1 and CSI-RS 2 in Fig. 6B) is signaled to the user terminal. The CSI-RS combination may be made by using downlink control information (PDCCH signal, EPDCCH signal), higher layer signal (RRC signaling, broadcast signal) and the like.

In addition, as for the location of REs to map with CSI-RSs (CSI-RS pattern), the existing CSI-RS mechanism is used, a signal sequence optimized for frequency synchronization as compared with the existing CSI-RS is used as the signal sequence to generate a synchronization signal and thereby to perform frequency synchronization. As for a newly applied signal sequence, PN sequence, Gold sequence, Zadoff-Chu sequence or the like may be used.

In addition, if the CSI-RS is extended to be used as a synchronization signal, it is preferable that the number of antenna ports for use in synchronization processing is 1. If the number of antenna ports of CSI-RS is 2, the user terminal performs despreading on CSI-RSs multiplexed by CDM so that the user terminal obtains a channel estimation result per transmission antenna. In this case, it may be difficult to obtain a channel estimation result per RE due to the effect of despreading and also difficult to estimate a frequency error. On the other hand, when the number of CSI-RS antenna ports is 1, the user terminal is able to obtain a channel estimation result of two REs per RB. Then, the obtained channel estimation result of two REs is used to be able to estimate a frequency error.

Thus, by performing synchronization in frequency or the like using a synchronization signal that is extended or modified from an existing reference signal, even when a carrier of lower CRS allocation density (or carrier where no CRS is allocated) is used, it is possible to perform synchronization processing properly. When the extended CSI-RS is used as a synchronization signal and its relation of Quasi co-location with another downlink signal is signaled, the same method as the existing CSI-RS or the same method as the synchronization signal described in the first embodiment may be applied thereto.

### (THIRD EMBODIMENT)

The third embodiment will be described by way of the example where when applying a carrier of a lower CRS allocation density than the existing carrier, frequency synchronization is performed by changing allocation of CRSs to assure synchronization (compensate for a frequency offset).

CRS is introduced in Rel. 8 and is used in cell search and channel estimation. The signal sequence of CRS is pseudo-random sequence and is subjected to QPSK modulation. The QPSK-modulated CRS is mapped to a plurality of resource elements (REs) in accordance with a predetermined rule. In order to perform channel estimation of maximum four channels in the user terminal UE, maximum four antenna ports (numbered as 0 to 3) are supported. CRSs of respective antenna ports (R₀ to R₃) are mapped to mutually different resource elements (REs) and are subjected to orthogonal multiplexing by time division multiplexing (TDM)/frequency division multiplexing (FDM).

From the view point of using CRS in frequency synchronization, the CRS insertion density becomes too large. Then, in the third embodiment, in the new carrier type, frequency synchronization is performed by using CRSs allocated at a lower density in the frequency and/or time domain. Specifically, in the time axis direction, it is possible to restrict subframes to transmit CRS. That is, instead of transmitting CRS in each subframe, CRS is transmitted with predetermined periodicity thereby to perform synchronization processing in a subframe to transmit the CRS.

In addition, in the frequency axis direction, RB to allocate with CRS may be restricted. Or, the number of antenna ports to transmit CRS may be restricted (for example, the number of antenna ports may be restricted to one). Thus, when applying the new carrier type of a lower CRS allocation density than the existing carrier, CRS allocation is determined to assure frequency synchronization, thereby making it possible to compensate for a frequency error and use radio resources effectively.

If a changed CRS is used as a synchronization signal and the Quasi co-location relation with another downlink signal is signaled, the same method as that for the existing CRS or the same method as that for the synchronization signal described in the first embodiment above may be also applied.

In the above-mentioned second and third embodiments, when applying a carrier of a lower CRS allocation density as compared with the existing carrier, CSI-RS or CRS is extended or modified to be used as a synchronization signal. However this is not intended for limiting the present invention. The mechanism of the second or third embodiment may be applied to other reference signals. In addition, the above description has been made mainly about frequency synchronization, however, extension of the existing reference signal may be made to be applied to time synchronization.

### (FOURTH EMBODIMENT)

In the fourth embodiment, explanation is made about signaling when switching between the relation of Quasi co-location of an existing carrier (for example, carrier of up to Rel. 11) and the relation of Quasi co-location of a new carrier (for example, carrier introduced in Rel. 12 or later).

For example, it is assumed that configuration is switched between an existing carrier (first carrier type) subframe in which CRSs are mapped at a predetermined density and a new carrier type (second carrier type) subframe in which CRSs are mapped at a lower density than that of the existing carrier subframe. In this case, the user terminal performs frequency synchronization processing using different downlink signals (for example, CRS or synchronization signal) depending on the carrier type.

When the existing carrier subframe is configured, the user terminal performs frequency/time synchronization processing using CRS or CSI-RS in accordance with a transmission mode (for example, whether CoMP is applied or not). For example, in the transmission mode A (for example, Non CoMP operation), the user terminal performs time/frequency synchronization processing using CRS, and in the transmission mode B (for example, CoMP operation), the user terminal performs frequency synchronization processing using CRS and also performs time synchronization processing using CSI-RS.

On the other hand, when the new carrier type subframe is configured, the user terminal performs at least frequency synchronization processing using a synchronization signal. The synchronization signal may be a new synchronization signal (for example, discovery signal) described in the above-mentioned first embodiment, a synchronization signal that is obtained by extending or modifying an existing reference signal as described in the above-mentioned second or third embodiment.

For example, when transmitting a synchronization signal described in the first embodiment in the new carrier type, the radio base station transmits association information in accordance with the carrier type configured in the subframe, that is, by switching between association information for the first carrier type and association information for the second carrier type. The radio base station signals switching of the association information to the user terminal so that the user terminal can determine which association information to apply.

Here, the association information for the first carrier type is association information between CRS and another downlink signal (for example, CSI-RS, DM-RS or the like) and association information for the second carrier type is association information between a synchronization signal and another downlink signal (for example, CSI-RS, DM-RS or the like).

Signaling to notify the user terminal of switching of association information corresponding to each carrier may be performed explicitly by higher layer signaling (for example, RRC signaling).

Besides, the radio base station may notify the user terminal of switching of association information implicitly by associating it with signaling information (carrier type information) to notify the user terminal of classification of carrier types (existing carrier type and new carrier type). With this notification, the user terminal is able to determine association information and carrier to apply, based on the carrier type information transmitted from the radio base station.

For example, the radio base station notifies the user terminal of signaling information to notify the user terminal of configuration of an existing carrier type by associating it with application of association information between CRS and another downlink signal. The radio base station notifies the user terminal of signaling information to notify the user terminal of configuration of a new carrier type by associating it with association information between a synchronization signal and another downlink signal. With this structure, it is possible to minimize an increase of signaling overhead.

In addition, the radio base station may notify the user terminal of switching of association information implicitly in association with the transmission mode. For example, when configuring the new carrier type, the radio base station associates the transmission mode to notify the user terminal with application of association information between a synchronization signal and another downlink signal. With this configuration, it is possible to minimize an increase of signaling overhead.

Here, the above-described first to fourth embodiments have been described by way of an example of the new carrier type (NCT) supporting specific user terminals selectively. The present invention is not limited to this and may be applied to an extended carrier having backward compatibility with the existing carrier. Besides, the relation of Quasi co-location with a synchronization signal (association information) has been described mainly by way of examples of DM-RS for PDSCH and CSI-RS. But, the present invention is not limited to them. Like signaling of the relation of Quasi co-location may be applied to another physical channel such as enhanced control channel (EPDCCH) and reference signals.

### (RADIO COMMUNICATION SYSTEM)

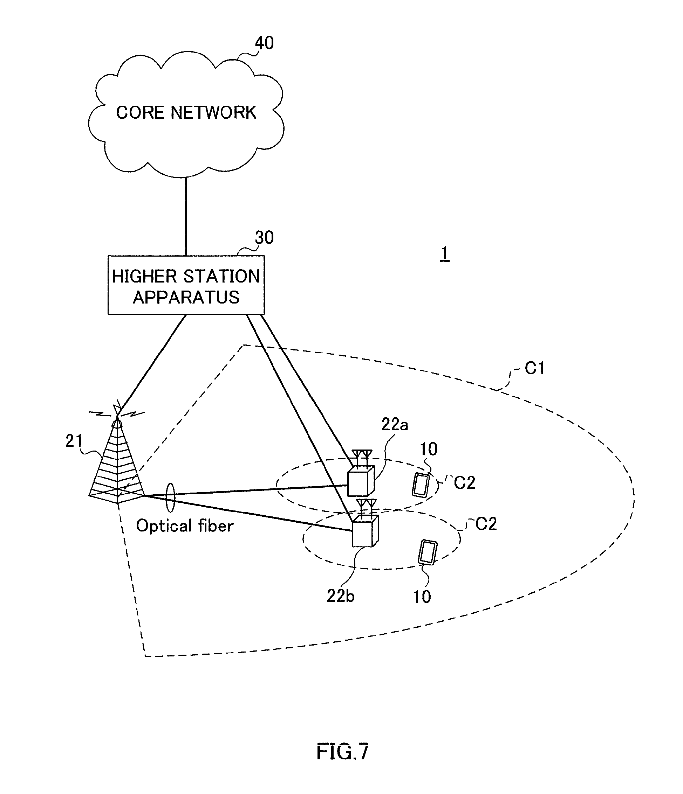

Next description is made in detail about a radio communication system according to the present embodiment. Fig. 7 is a schematic diagram illustrating the radio communication system according to the present embodiment. For example, the radio communication system illustrated in Fig. 7 is an LTE system or a system comprising a SUPER 3G. In this radio communication system, carrier aggregation is applied in which a plurality of base frequency blocks (component carriers) are aggregated, each component carrier being a unit of system band of the LTE system. This radio communication system may be called IMT-Advanced, 4G, or FRA (Future Radio Access).

The radio communication system 1 illustrated in Fig. 7 includes a radio base station 21 forming a macro cell C1, and radio base stations 22a and 22b that are arranged within the macro cell C1 and each form a smaller cell C2 than the macro cell C1. In the macro cell C1 and small cells C2, user terminals 10 are located. Each user terminal 10 is configured to be able to perform radio communications with the radio base station 21 and the radio base stations 22.

Communication between the user terminal 10 and the radio base station 21 is performed by using a carrier of a relatively low frequency band (for example, 2GHz) and a broad bandwidth (such a carrier is an existing carrier also called "legacy carrier"). On the other hand, the communication between the user terminal 10 and a radio base station 22 may be performed by using a carrier of a relatively high frequency band (for example, 3.5 GHz) and a narrow bandwidth or by using the same carrier as communication with the radio base station 21. The radio base station 21 and each radio base station 22 are connected to each other wiredly or wirelessly.

The base station apparatuses 21 and 22 are connected to a higher station apparatus 30, and are also connected to a core network 40 via the higher station apparatus 30. The higher station apparatus 30 includes, but is not limited to, an access gateway apparatus, a radio network controller (RNC), a mobility management entity (MME). Each radio base station 22 may be connected to the higher station apparatus via the radio base station 21.

The radio base station 21 is a radio base station having a relatively wide coverage area and may be called eNodeB, radio base station, transmission point or the like. The radio base station 22 is a radio base station having a local coverage area and may be called a pico base station, a femto base station, Home eNodeB, RRH (Remote Radio Head), micro base station, transmission point or the like. In the following description, the radio base stations 21 and 22 are collectively called radio base station 20, unless they are described discriminatingly. Each user terminal 10 is a terminal supporting various communication schemes such as LTE, LTE-A and the like (for example, UE in Rel. 11 or earlier and UE in Rel. 12 or later) and may comprise not only a mobile communication terminal, but also a fixed communication terminal.

In the radio communication system, as multi access schemes, OFDMA (Orthogonal Frequency Division Multiple Access) is adopted for the downlink and SC-FDMA (Single Carrier Frequency Division Multiple Access) is adopted for the uplink. OFDMA is a multi-carrier transmission scheme to perform communication by dividing a frequency band into a plurality of narrow frequency bands (subcarriers) and mapping data to each subcarrier. SC-FDMA is a single carrier transmission scheme to perform communications by dividing, per terminal, the system band into bands formed with one or continuous resource blocks, and allowing a plurality of terminals to use mutually different bands thereby to reduce interference between terminals.

Here, description is made about communication channels used in the radio communication system illustrated in Fig. 7. As for downlink communication channels, there are used a PDSCH (Physical Downlink Shared Channel) that is used by each user terminal 10 on a shared basis and a downlink L1/L2 control channel (PDCCH, PCFICH, PHICH, EPDCCH). The PDSCH is used to transmit user data and higher control information. The PDCCH (Physical Downlink Control Channel) is used to transmit PDSCH and PUSCH scheduling information and so on. PCFICH (Physical Control Format Indicator Channel) is used to transmit the number of OFDM symbols used in PDCCH. PHICH (Physical Hybrid-ARQ Indicator Channel) is used to transmit HARQ ACK/NACK in response to PDSCH. EPDCCH (enhanced PDCCH) may transmit PDSCH and PUSCH scheduling information and so on. EPDCCH may be mapped as frequency-division-multiplexed with PDSCH.

As for the uplink communication channels, there are used a PUSCH (Physical Uplink Shared Channel) that is used by each user terminal 10 on a shared basis and a PUCCH (Physical Uplink Control Channel) as an uplink control channel. The PUSCH is used to transmit user data and higher control information. And, PUCCH is used to transmit downlink radio quality information (CQI: Channel Quality Indicator), ACK/NACK and so on.

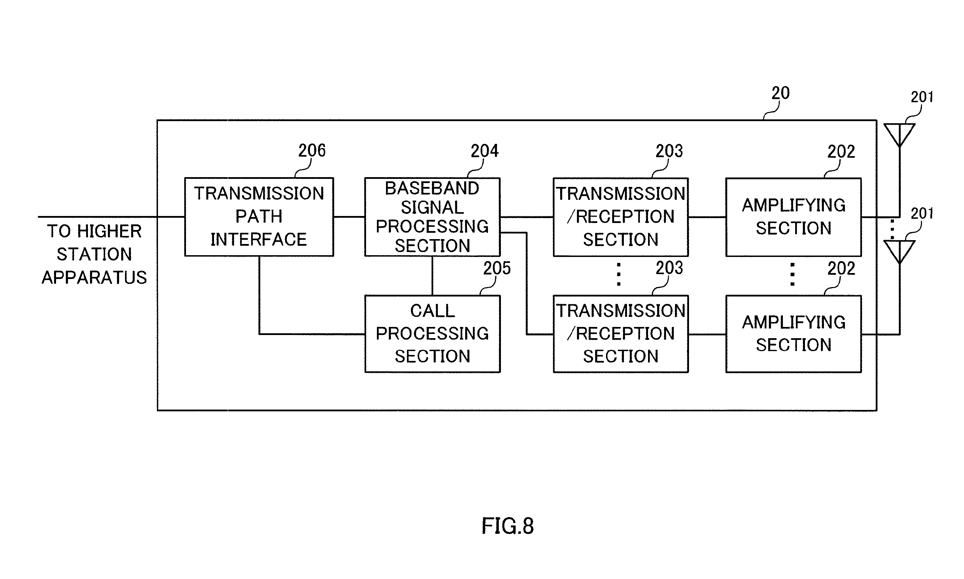

With reference to Fig. 8, description is made about an overall configuration of the radio base station according to the present embodiment.

The radio base station 20 is configured to have transmission/reception antennas 201, amplifying sections 202, transmission/reception sections (transmission section/reception section) 203, a baseband signal processing section 204, a call processing section 205 and a transmission path interface 206. Transmission data that is to be transmitted on the downlink from the radio base station 20 to the user terminal 10 is input from the higher station apparatus 30, through the transmission path interface 206, into the baseband signal processing section 204.

In the baseband signal processing section 204, downlink data channel signals are subjected to PDCP layer processing, RLC (Radio Link Control) layer transmission processing such as division and coupling of transmission data and RLC retransmission control transmission processing, MAC (Medium Access Control) retransmission control, including, for example, HARQ transmission processing, scheduling, transport format selection, channel coding, inverse fast Fourier transform (IFFT) processing, and precoding processing. As for signals of the physical downlink control channel as a downlink control channel, transmission processing is performed, including channel coding and inverse fast Fourier transform.

Also, the baseband signal processing section 204 notifies user terminals 10 connected to the same cell of control information for allowing each user terminal 10 to perform radio communication with the radio base station 20 by a broadcast channel. Control information for communication in the cell includes, for example, uplink or downlink system bandwidth, identification information of root sequences (Root Sequence Index) for generating random access preamble signals in PRACH (Physical Random Access Channel) and so on.

In each transmission/reception section 203, baseband signals output from the baseband signal processing section 204 are subjected to frequency conversion processing into a radio frequency band. The radio frequency signals are amplified by the amplifying section 202 and output to the transmission/reception antenna 201. The transmission/reception section 203 serves as a transmission section configured to transmit the relation of Quasi co-location (association information) between downlink signals (synchronization signal, CSI-RS, DM-RS, etc.).

Meanwhile, as for data to be transmitted on the uplink from the user terminal 10 to the radio base station 20, radio frequency signals are received in the transmission/reception antenna 201, amplified in the amplifying section 202, subjected to frequency conversion and converted into baseband signals in the transmission/reception section 203, and are input to the baseband signal processing section 204.

The baseband signal processing section 204 performs FFT (Fast Fourier Transform) processing, IDFT (Inverse Discrete Fourier Transform) processing, error correction decoding, MAC retransmission control reception processing, and RLC layer and PDCP layer reception processing on the transmission data included in the baseband signals received on the uplink. Then, the decoded signals are transferred to the higher station apparatus 30 through the transmission path interface 206.

The call processing section 205 performs call processing such as setting up and releasing a communication channel, manages the state of the radio base station 20 and manages the radio resources.

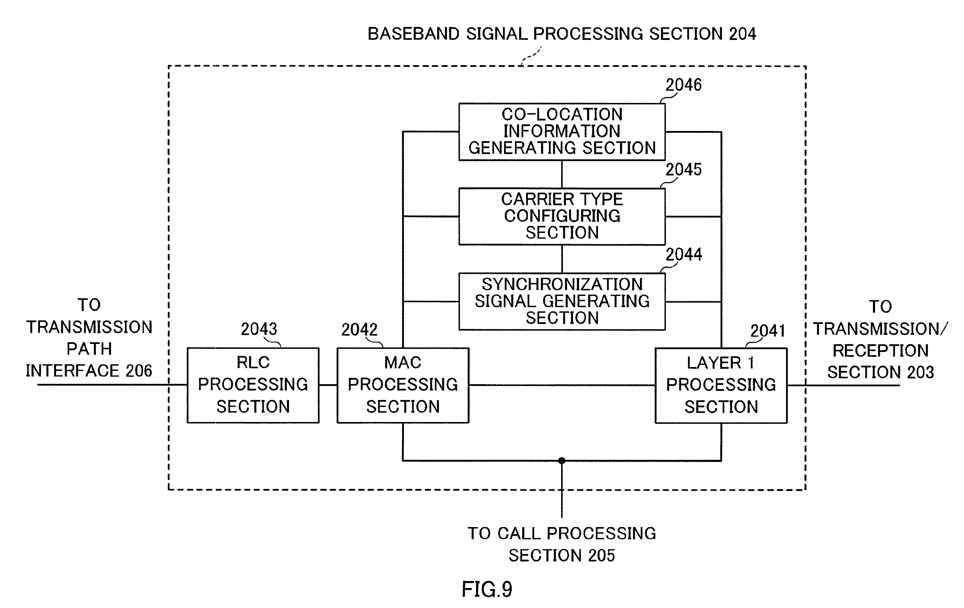

Fig. 9 is a block diagram illustrating the configuration of the baseband signal processing section of the radio base station in Fig. 8. The baseband signal processing section 204 is configured to mainly have a layer 1 processing section 2041, a MAC processing section 2042, an RLC processing section 2043, a synchronization signal generating section 2044, a carrier type configuring section 2045 and a co-location information generating section 2046.

The layer 1 processing section 2041 mainly performs processing related to the physical layer. The layer 1 processing section 2041 performs, for example, processing such as channel decoding, Fast Fourier transform (FFT), frequency demapping, Inverse Discrete Fourier transform (IDFT) and data demodulation on signals received on the uplink. Besides, the layer 1 processing section 2041 performs processing such as channel coding, data modulation, frequency mapping and inverse Fourier transform (IFFT) on signals to be transmitted on the downlink.

The MAC processing section 2042 performs MAC layer retransmission control, uplink/downlink scheduling, selection of transmission format for PUSCH/PDSCH, selection of resource blocks for PUSCH/PDSCH and the like on signals received on the uplink. The RLC processing section 2043 performs packet division, packet coupling, RLC layer retransmission control, and the like on signals received on the uplink and signals to be transmitted on the downlink.

The carrier type configuring section 2045 determines a carrier type to use in transmission of downlink signals and configures the determined carrier type in a predetermined subframe. For example, the carrier type configuring section 2045 configures the carrier type by switching between a subframe of an existing carrier (first carrier type) in which CRSs are mapped at a predetermined density and a subframe of a new carrier type (second carrier type) in which CRSs are mapped at a lower density than the existing carrier subframe. The carrier type configuring section 2045 may be configured to be included in the MAC processing section 2042.

The synchronization signal generating section 2044 generates a synchronization signal to use in frequency synchronization by the user terminal. For example, when configuring the subframe of the second carrier type in which CRSs are mapped at a lower density than the subframe of the existing carrier, the synchronization signal generating section 2044 generates a synchronization signal as described in any of the first to third embodiments above. As the user terminal uses the synchronization signal generated in the synchronization signal generating section 2044, it is possible to demodulate data signals and the like appropriately.

The co-location information generating section 2046 generates association information (information of the relation of Quasi co-location) of downlink signals to notify the user terminal. For example, when configuring the new carrier type subframe and performing transmission of a synchronization signal as described in the above-mentioned first embodiment, the co-location information generating section 2046 generates association information for the new carrier type (association information between synchronization signal and another downlink signal). The association information generated by the co-location information generating section 2046 is signaled to the user terminal by using higher layer signaling (broadcast signal, RRC signaling or the like) and/or downlink control information (DCI).

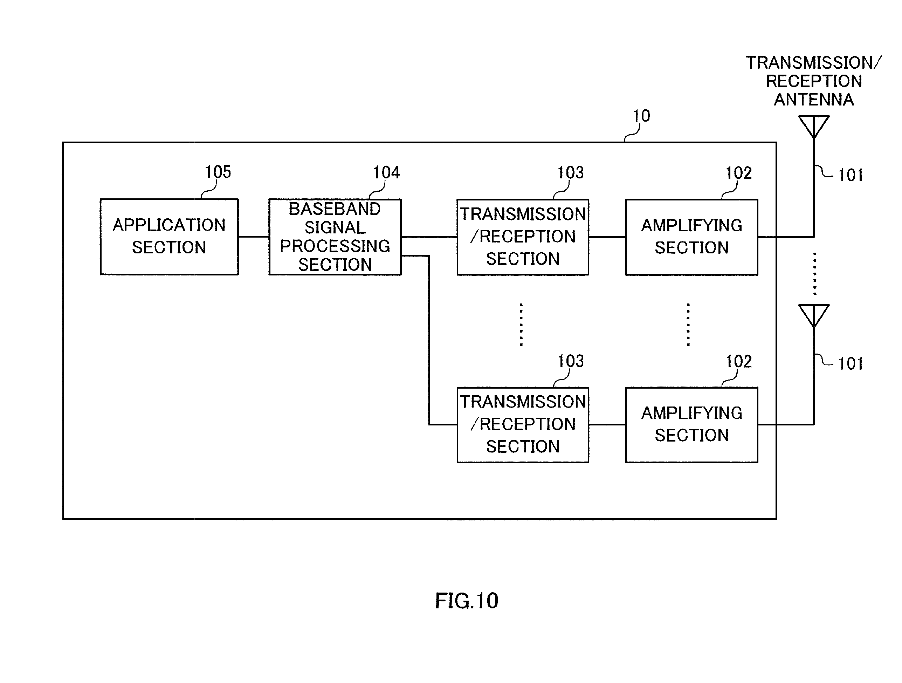

Next description is made, with reference to Fig. 10, about the overall configuration of the user terminal according to the present embodiment. As the LTE terminal and LTE-A terminal are the same in the structure of a main part of hardware, they are described undiscriminatingly. The user terminal 10 is configured to have transmission/reception antennas 101, amplifying sections 102, transmission/reception sections (transmission sections/reception sections) 103, a baseband signal processing section 104, and an application section 105.

As for the downlink data, radio frequency signals received by each transmission/reception antenna 101 are amplified in the amplifying section 102, and then, subjected to frequency conversion and converted into baseband signals in the transmission/reception section 103. These baseband signals are subjected to FFT processing, error correction coding, retransmission control reception processing and so on in the baseband signal processing section 104. In this downlink data, downlink transmission data is transferred to the application section 105. The application section 105 performs processing related to higher layers above the physical layer and the MAC layer. In the downlink data, broadcast information is also transferred to the application section 105.

On the other hand, uplink transmission data is input from the application section 105 to the baseband signal processing section 104. In the baseband signal processing section 104, mapping processing, retransmission control (HARQ) transmission processing, channel coding, DFT processing, IFFT processing and so on are performed, and the resultant signals are transferred to each transmission/reception section 103. In the transmission/reception section 103, the baseband signals output from the baseband signal processing section 104 are subjected to frequency conversion and converted into a radio frequency band. After that, the frequency-converted radio frequency signals are amplified in the amplifying section 102, and then, transmitted from the transmission/reception antenna 101.

Here, the transmission/reception section 103 serves as a reception section configured to receive a synchronization signal transmitted when the second carrier type subframe is configured where CRSs are mapped at a lower density than the existing carrier subframe, and association information between the synchronization signal and another downlink signal.

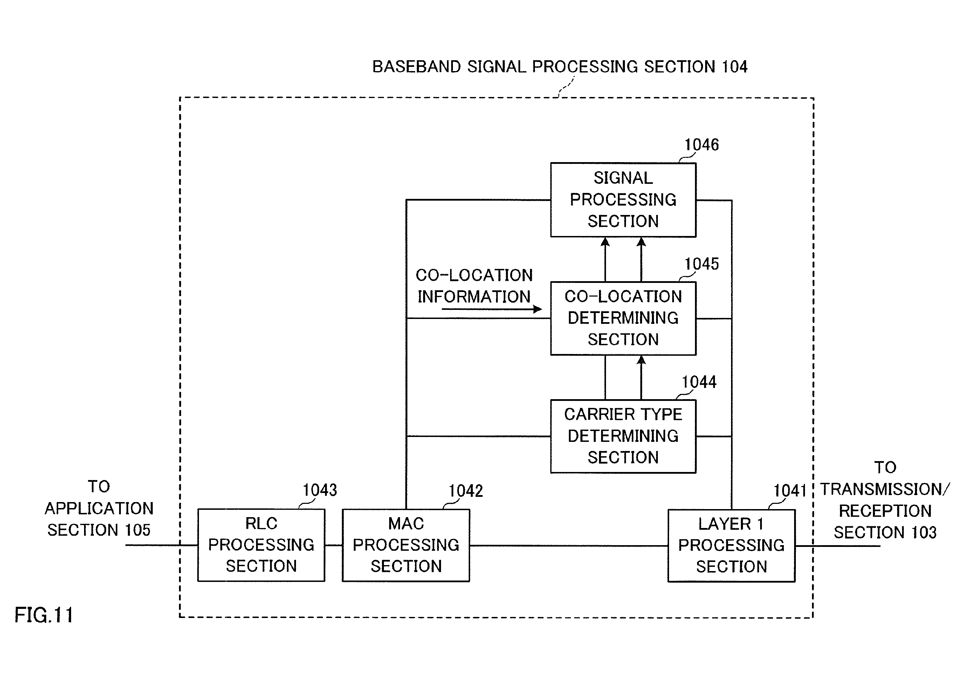

Fig. 11 is a block diagram illustrating the configuration of the baseband signal processing section provided in the user terminal. The baseband signal processing section 104 is configured to include mainly a layer 1 processing section 1041, a MAC processing section 1042, an RLC processing section 1043, a carrier type determining section 1044, a co-location determining section 1045 and a signal processing section 1046.

The layer 1 processing section 1041 mainly performs processing related to the physical layer. The layer 1 processing section 1041 performs, for example, processing such as channel decoding, fast Fourier transform (FFT), frequency demapping and data demodulation on signals received on the downlink. Besides, the layer 1 processing section 1041 performs processing such as channel coding, discrete Fourier transform (DFT), data modulation, frequency mapping and inverse fast Fourier transform (IFFI) on signals to be transmitted on the uplink.

The MAC processing section 1042 performs MAC layer retransmission control (HARQ), analysis of downlink scheduling information (identification of a transmission format of PDSCH, specification of PDSCH resource blocks) and the like on signals received on the downlink. Besides, the MAC processing section 1042 performs processing MAC retransmission control, analysis of uplink scheduling information (identification of PUSCH transmission format, specification of PUSCH resource blocks) and the like on signals to be transmitted on the uplink.

The RLC processing section 1043 performs packet dividing, packet coupling, RLC layer retransmission control and the like on packets received on the downlink and packets to be transmitted on the uplink.

The carrier type determining section 1044 determines a carrier type to be configured in each subframe, based on carrier type information given from the radio base station. For example, when the carrier type information is given by RRC signaling, the carrier type determining section 1044 determines the carrier type based on information included in the RRC signaling. The carrier type determining section 1044 may be configured to be included in the MAC processing section 1042.

The co-location determining section 1045 determines the relation of co-location between downlink signals based on co-location information given from the radio base station. For example, the new carrier type subframe is configured, the co-location determining section 1045 determines the relation of co-location based on association information between a synchronization signal and another downlink signal (for example, CSI-RS, DM-RS, or the like) given from the radio base station. The co-location information from the radio base station is given by using higher layer signaling or downlink control information

The signal processing section 1046 performs signal processing (synchronization processing, channel estimation, demodulation processing and the like) in consideration of association information between downlink signals (relation of Quasi co-location), based on determination results output from the carrier type determining section 1044 and the co-location determining section 1045. For example, when the new carrier type subframe is configured, the signal processing section 1046 performs frequency synchronization processing using the synchronization signal and also performs PDSCH demodulation. The signal processing section 1046 may be configured to be included in the layer 1 processing section 1041.

As described up to this point, according to the communication system of the present embodiment, even when adopting a carrier in which CRSs are mapped at a lower CRS mapping density than the existing carrier, it is possible to perform the reception processing(channel estimation, synchronization processing, demodulation processing, etc.) appropriately at the user terminal by configuring at least a synchronization signal to be used in frequency synchronization and signaling association information between the synchronization signal with another downlink signal to the user terminal.

Up to this point, the present invention has been described in detail by way of the above-described embodiments. However, a person of ordinary skill in the art would understand that the present invention is not limited to the embodiments described in this description. The present invention could be embodied in various modified or altered forms without departing from the gist or scope of the present invention defined by the claims. Besides, the embodiments may be applied in combination appropriately. Therefore, the statement in this description has been made for the illustrative purpose only and not to impose any restriction to the present invention.

The disclosure of Japanese Patent Application No. 2013-011434 filed on January 24, 2013, including the specification, drawings, and abstract, is incorporated herein by reference in its entirety.

## Claims

1. A radio base station comprising:
a configuring section that configures a first carrier type subframe in which cell-specific reference signals are mapped at a predetermined density, and a second carrier type subframe in which cell-specific reference signals are mapped at a density that is lower than the predetermined density of the first carrier type subframe;
a generating section that, when configuring the second carrier type subframe, generates a synchronization signal to use at least for frequency synchronization; and
a transmitting section that transmits association information for associating the synchronization signal with an other downlink signal that is transmitted in the second carrier type subframe.

2. The radio base station according to claim 1, wherein the other downlink signal is at least one of a channel state measurement reference signal, a user-specific reference signal for a downlink shared channel and a demodulation reference signal for an enhanced control channel.

3. The radio base station according to claim 1 or 2, wherein the transmitting section transmits the association information by downlink control information and/or higher layer signaling.

4. The radio base station according to claim 3, wherein the transmitting section transmits a plurality of association information candidates by RRC signaling and transmits downlink control information including identification information to identify predetermined association information from the plurality of association information candidates.

5. The radio base station according to claim 3, wherein when configuring the second carrier type subframe, the transmitting section transmits the synchronization signal by replacing cell-specific reference signal with the synchronization signal using association information for associating a cell-specific reference signal and an other downlink signal that are transmitted in the first carrier type subframe.

6. The radio base station according to claim 1, wherein the transmitting section transmits to the user terminal by switching between association information of a cell-specific reference signal with an other downlink signal based on a carrier type configured in a subframe or association information of a synchronization signal with an other downlink signal and signals switching of association information to the user terminal.

7. The radio base station according to claim 6, wherein the transmitting section signals, to the user terminal, the switching of the association information in association with a transmission mode or carrier type information.

8. The radio base station according to claim 1, wherein the second carrier type subframe is a new carrier type that is only supportable by a part of a plurality of user terminals.

9. A user terminal comprising:
a receiving section that receives a downlink signal that is transmitted in a first carrier type subframe in which cell-specific reference signals are mapped at a predetermined density and a downlink signal that is transmitted in a second carrier type subframe in which cell-specific reference signals are mapped at a density that is lower than the density of the first carrier type subframe; and
a processing section that, when the second carrier type subframe is configured, performs at least frequency synchronization using a synchronization signal contained in the downlink signal transmitted in the second carrier type subframe,
wherein the receiving section receives association information in which the synchronization signal is associated with an other downlink signal that is transmitted in the second carrier type subframe, and the processing section performs synchronization processing based on the association information.

10. A radio communication method between a radio base station and a user terminal, comprising the steps of:
by the radio base station,
configuring a first carrier type subframe in which cell-specific reference signals are mapped at a predetermined density and a second carrier type subframe in which cell-specific reference signals are mapped at a density that is lower than the density of the first carrier type subframe;
when configuring the second carrier type subframe, generating a synchronization signal to use at least for frequency synchronization; and
transmitting, to the user terminal, association information for associating the synchronization signal with an other downlink signal that is transmitted in the second carrier type subframe; and
by the user terminal,
when the second carrier type subframe is configured, performing at least frequency synchronization based on the association information and the synchronization signal.
